# DEMANDE DE BREVET EUROPEEN

(11) **EP 1 962 239 A1**
(43) Date de publication de la demande: **27.08.2008**
(21) Numéro de dépôt: 08003349.1
(22) Date de dépôt: 25.02.2008
(51) Int. Cl.: G06Q 20/00, G07F 7/10

(54) **Procédé de vérificatiion d'un code identifiant un porteur, carte à puce et terminal respectivement prévus pour la mise en ceuvre dudit procédé**

(30) Priorité: 26.02.2007 FR 0701351
(71) Demandeur: SAGEM MOBILES, 75015 Paris (FR)
(72) Inventeur: Heurtaux, Frédéric, 13610 Le Puy La Sainte Reparade (FR); Charbonnier, Philippe, 78600 Le Mesnil Le Roi (FR); Delmas, Gilles, 95520 Osny (FR)
(74) Mandataire: Maillet, Alain

(57) **Abrégé**

La présente invention concerne un procédé de vérification d'un code identifiant un porteur, dans le cadre d'une procédure d'authentification du porteur, le porteur disposant d'un terminal utilisateur contenant une carte bancaire, la carte bancaire communiquant avec un terminal de paiement disposant d'un afficheur.

Selon l'invention, ledit procédé est caractérisé en ce qu'il comprend les étapes suivantes :
- une étape de génération d'une matrice de transposition de l'alphabet dont est issu le code ;
- une étape d'affichage par le terminal de paiement de la matrice de transposition générée ;
- une étape de saisie sur le terminal utilisateur du code transposé correspondant au code identifiant le porteur transposé conformément à la matrice affichée;

une étape de confrontation du code transposé et du code original stocké dans le système.

La présente invention concerne également une carte à puce et un terminal respectivement prévus pour la mise en oeuvre dudit procédé.

## Description

La présente invention concerne un procédé de vérification d'un code identifiant un porteur, dans le cadre d'une procédure d'authentification dudit porteur. Elle vise les transactions bancaires sans contact depuis un téléphone mobile et plus particulièrement la sécurisation de la procédure d'authentification du porteur par saisie d'un code d'identification connu sous le nom de code PIN (*Personnal Identification Number* en anglais).

Les techniques traditionnelles de paiement par carte impliquent généralement une authentification du porteur par vérification d'un code d'identification de celui-ci, le code PIN. Les cartes de paiement intègrent une puce contenant l'application bancaire et incluant les données relatives à l'identité du porteur. Ces données comprennent le code d'identification PIN du porteur. Lors de l'utilisation de la carte dans un terminal de paiement tel qu'un distributeur d'argent liquide ou un terminal dans un magasin, la carte est introduite dans le terminal. Dès lors, celui-ci peut communiquer avec la puce que comporte la carte. Parmi les opérations entre le terminal et la carte pour effectuer un paiement, est effectuée une opération d'authentification du porteur. Cette opération consiste généralement à vérifier que le porteur connaît un secret associé à l'abonné. Ce secret prend le plus souvent la forme du code PIN d'identification du porteur. L'opération de vérification du code du porteur peut être exécutée de diverses manières. Elle a toujours comme but la confrontation du code connu du porteur et de celui associé à la carte et stocké sur la carte ou éventuellement sur un serveur. Le moyen le plus simple, utilisé par exemple dans le système connu sous le nom de carte bleue en France, est le code PIN qui est simplement envoyé à la puce qui le compare à celui qu'elle possède en mémoire et valide l'authentification en fonction du résultat de cette comparaison. La norme EMV *(Europay, MasterCard* et *VISA,* les trois entreprises à l'origine de cette norme) établit les différentes méthodes pouvant être utilisées pour cette authentification. Celles-ci peuvent impliquer l'échange de données cryptées. La sécurité de ces systèmes est basée, entre autres, sur le fait que le terminal de paiement est sous le contrôle d'une autorité et la carte à puce intègre des procédés contre le piratage.

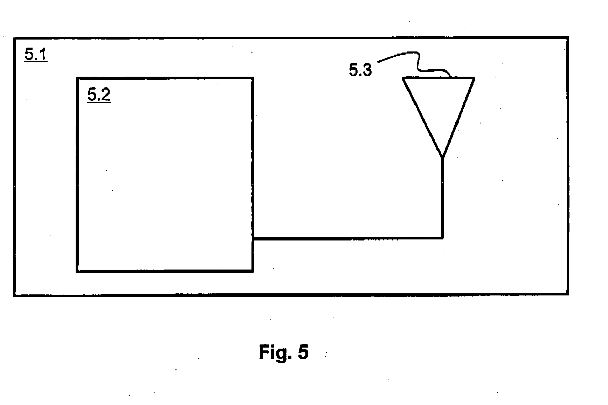

Une nouvelle technique de paiement par carte, connue sous le nom de paiement sans contact, se développe et implique des cartes ne nécessitant pas d'être insérées dans le terminal. La communication entre le terminal et la carte est alors basée sur la technologie de communication par radio à distance très courte qui s'est développée récemment. On les regroupe de manière générale sous le nom de RFID *(Radio Frequency IDentification* en anglais). On peut citer parmi celles-ci, NFC *(Near Field Communication* en anglais), un standard de communication à très courte distance initié par Philips et Sony au sein du NFC-forum et maintenant reconnu comme norme internationale. Ce type de communication peut s'effectuer selon deux modes: un mode passif et un mode actif. Dans le cas d'une communication selon le mode passif, un des interlocuteurs émet son signal selon la fréquence choisie. L'autre interlocuteur est passif et fait varier le champ émis par rétro-modulation pour émettre des informations en retour. Il peut être alimenté en énergie ou bien utiliser l'énergie du signal reçu pour son fonctionnement par induction. Dans le cas d'une transmission active, les deux interlocuteurs sont alimentés et émettent leurs signaux. Nous nous intéressons particulièrement au mode de transmission passif. Dans ce cas, illustré à la Fig. 5, un marqueur RFID, référencé 5.1, se compose d'une puce électronique, référencée 5.2, connectée à une antenne référencée 5.3. Cette puce est conçue pour communiquer avec un lecteur RFID. Seul le lecteur est alimenté, le marqueur est activé par un signal émis par le lecteur lorsque la puce se trouve à proximité immédiate du lecteur. Le signal émis par le lecteur peut transporter conjointement l'énergie permettant le fonctionnement du marqueur et des données à destination de celui-ci. Grâce à l'énergie reçue par le marqueur, celui-ci va pouvoir émettre grâce à son antenne des données stockées dans la mémoire incluse dans la puce. Il est également possible de stocker dans la mémoire de la puce des données transmises par le lecteur. En fait, le lecteur peut lire et écrire des données dans la mémoire de la puce. Les cartes à puce sans contact intègrent un tel marqueur RFID, tandis que le terminal de paiement est doté du lecteur correspondant. La communication entre le terminal de paiement et la carte s'effectue donc par radio et il suffit d'approcher la carte du terminal pour que l'opération de paiement puisse avoir lieu. Le paiement, et en particulier l'authentification du porteur, du moins quand elle a lieu, ce qui peut ne pas être le cas pour de petits montants, s'effectue alors de la même manière que dans le cas d'une carte avec contact.

Le développement de la téléphonie mobile ouvre la voie à l'utilisation du téléphone mobile comme moyen de paiement. Les téléphones mobiles sont déjà équipés d'une carte à puce contenant les données relatives à l'utilisateur et à son identité, connue sous le nom de carte SIM *(Subscriber Identity Module* en anglais). L'ajout des fonctionnalités bancaires sur la carte SIM, associée à un module de communication par onde radio à distance très courte, permet de transformer un téléphone mobile en moyen de paiement sans contact. La carte SIM contenant une application bancaire devient donc une carte bancaire. Contrairement à une carte de paiement sans contact, le téléphone mobile ainsi équipé dispose également de son clavier et de son écran. Il est donc possible d'utiliser ce clavier et cet écran au cours de la transaction de paiement, entre autre pour l'entrée du code PIN lors de la procédure d'authentification du porteur. Le fait de permettre au porteur d'entrer son code PIN sur son téléphone et non pas sur le terminal de paiement limite la possibilité qu'un tiers puisse observer le code entré à l'insu du porteur pendant la saisie.

Dans un système de paiement sans contact ainsi basé sur l'utilisation d'un terminal mobile tel un téléphone, la carte à puce et son application bancaire, la liaison et le terminal de paiement sont considérés comme sûrs, ou du moins raisonnablement sûrs. Par contre, l'opération du téléphone se base sur un logiciel système gérant les différents organes matériels du téléphone de plus en plus sophistiqué. Ces logiciels système sont généralement aptes à exécuter des applications diverses, à se connecter à des réseaux de communication comme Internet, à recevoir des messages électroniques et autres. Ces téléphones deviennent de véritables ordinateurs de poche connectés ouverts sur l'extérieur. Ce constat fait craindre les problèmes de sécurité que l'on connaît dans le monde informatique et plus précisément l'apparition de codes malicieux sous la forme de virus informatiques, de logiciels espions ou autres. On peut craindre en particulier l'apparition de codes malicieux permettant l'enregistrement des touches actionnées par le porteur, codes connus sous le nom de *keylogger* en anglais. Ces codes sont capables d'analyser et de stocker ou de transmettre à leur auteur, les séquences de touches tapées par l'utilisateur.

L'invention vise à résoudre les problèmes précédents par la proposition d'un système de paiement sans contact comprenant un terminal de paiement et un terminal mobile doté d'une application bancaire sans contact. La saisie du code d'identification du porteur est sécurisée par la génération d'une matrice de transposition. Cette matrice de transposition est affichée sur le terminal de paiement de façon à permettre au porteur d'entrer une version transposée selon cette matrice de façon à ce que le code d'identification du porteur ne soit pas accessible en dehors de l'application bancaire comprise dans le terminal.

De cette façon, un éventuel code malicieux s'exécutant sur le terminal n'a pas accès au code d'identification du porteur.

Ainsi, la présente invention concerne un procédé de vérification d'un code identifiant un porteur, dans le cadre d'une procédure d'authentification du porteur, le porteur disposant d'un terminal utilisateur contenant une carte bancaire, la carte bancaire communicant avec un terminal de paiement disposant d'un afficheur. Ledit procédé de vérification comprend les étapes suivantes :
- une étape de génération d'une matrice de transposition de l'alphabet dont est issu le code ;
- une étape d'affichage par le terminal de paiement de la matrice de transposition générée;
- une étape de saisie sur le terminal utilisateur du code transposé correspondant au code identifiant le porteur transposé conformément à la matrice affichée ;
- une étape de confrontation du code transposé et du code original stocké dans le système.

Avantageusement, l'étape de génération de la matrice de transposition est effectuée par le terminal de paiement.

Avantageusement, l'étape de confrontation du code transposé et du code original, celui-ci étant stocké dans la carte bancaire, comprend:
- une étape d'envoi au terminal de paiement du code transposé saisi et ;
- une étape de transposition inverse de ce code transposé par le terminal de paiement conformément à la matrice générée.

Quant à l'étape de confrontation du code transposé et du code original, celui-ci étant stocké sur un serveur distant, elle comprend avantageusement :
- une étape d'envoi au terminal de paiement du code transposé saisi;
- une étape d'envoi par le terminal de paiement du code transposé saisi et de la matrice de transposition à un serveur pour la confrontation avec le code original.

Alternativement, elle comprend :
- une étape d'envoi au terminal de paiement du code transposé saisi;
- une étape de détransposition du code transposé, à l'aide de la matrice de transposition, par le terminal de paiement ; et
- une étape d'envoi par le terminal de paiement du code saisi détransposé à un serveur pour la confrontation avec le code original.

L'étape de génération de la matrice de transposition est par exemple effectuée par la carte bancaire contenue dans le terminal de l'utilisateur.

Ledit procédé de vérification comporte en outre, dans un mode de réalisation particulier, une étape d'envoi de ladite matrice générée par la carte au terminal de paiement pour affichage. Par exemple, ladite matrice est générée aléatoirement. Par exemple encore, une nouvelle matrice est générée aléatoirement pour chaque caractère saisi.

La présente invention concerne aussi une carte à puce dotée d'une application bancaire comprenant des moyens de stocker un code identifiant un porteur. Elle est caractérisée en ce qu'elle comporte en outre des moyens de générer une matrice de transposition de l'alphabet dont est issu le code.

Elle comprend en outre avantageusement des moyens de confronter un code transposé avec le code original stocké.

La présente invention concerne également un terminal comprenant une carte à puce telle qu'elle vient d'être décrite.

Un tel terminal est du type qui comprend des moyens de communication avec une carte à puce dotée d'une application bancaire. Il est avantageusement caractérisé en ce qu'il comporte des moyens d'afficher une matrice de transposition de l'alphabet dont est issu un code identifiant le porteur de ladite carte à puce.

Il comporte en outre avantageusement des moyens de générer ladite matrice de transposition.

Il comporte en outre avantageusement des moyens d'appliquer à un code reçu depuis la carte à puce une transposition inverse conforme à ladite matrice de transposition.

Enfin, il comporte avantageusement des moyens de réception de ladite matrice de transposition depuis ladite carte à puce.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 décrit l'architecture générale du système dans l'exemple de réalisation de l'invention.
La Fig. 2 décrit des exemples de réalisation de l'afficheur situé sur le terminal de paiement.
La Fig. 3 décrit l'organigramme des opérations d'authentification du porteur selon un premier mode de réalisation de l'invention.
La Fig. 4 décrit l'organigramme des opérations d'authentification du porteur selon un premier mode de réalisation de l'invention.
La Fig. 5 décrit l'architecture connue d'un marqueur RFID.

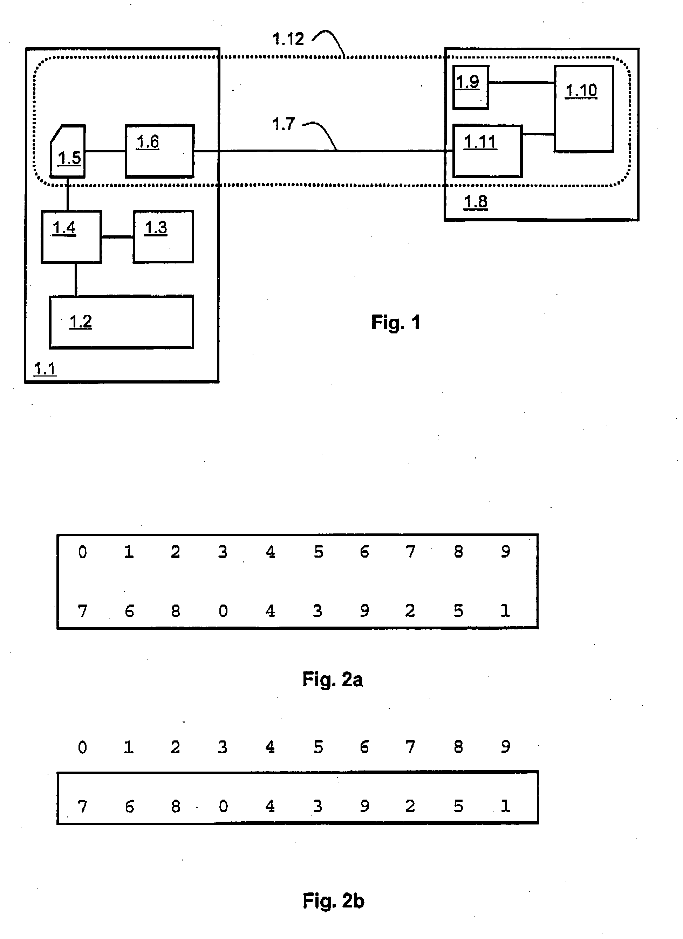

Un exemple de réalisation est illustré Fig. 1. Sur cet exemple, on a représenté un terminal, par exemple un téléphone mobile, référencé 1.1. Ce terminal est doté d'un clavier, référencé 1.2, connecté à un processeur de contrôle référencé 1.4. Ce processeur de contrôle 1.4 pilote également un écran référencé 1.3. Le processeur de contrôle pilote également les autres organes, non référencés, du terminal tels que des interfaces de communication à des réseaux de télécommunication, un microphone et un haut-parleur pour l'utilisation téléphonique du terminal ou d'autres. La carte à puce est référencée 1.5. Dans l'exemple de réalisation de l'invention, cette carte à puce contient deux fonctionnalités différentes. D'une part, elle contient les données relatives à la fonctionnalité téléphonique du terminal, c'est-à-dire les constituants classiques d'une carte dite SIM. D'autre part, elle contient également une partie relative à l'application bancaire. Cette partie contient les informations relatives au porteur et son identification bancaire. Cette carte à puce est connectée à un module de communication par radio à distance très courte du type RFID référencé 1.6. Ce module permet l'établissement d'un lien de communication, référencé 1.7, entre la carte à puce et le terminal de paiement référencé 1.8. L'exemple de réalisation de l'invention est basé sur une communication de type RFID, mais tout moyen de communication entre le terminal de paiement et le terminal du porteur peut être utilisé pour réaliser l'invention. Cette communication peut être radio, c'est-à-dire sans fil, ou être basée sur une connexion physique. Dans tous les cas, elle doit permettre une communication directe entre la carte à puce et le terminal de paiement, préférentiellement sans utiliser, du moins directement, les moyens de communication génériques du terminal du porteur pour des raisons de sécurité. L'utilisation des moyens génériques de communication du terminal peut être envisagée à la condition d'utiliser un canal chiffré. Le terminal de paiement est au moins constitué d'une interface de communication, référencée 1.11, avec le terminal du porteur. Cette interface 1.11 est, dans l'exemple de réalisation, une interface de communication par radio à distance très courte de type RFID. Le terminal est contrôlé par un processeur référencé 1.10 qui contrôle également un écran d'affichage référencé 1.9.

Du point de vue de la sécurité, on peut distinguer deux zones dans le système. Une première zone, référencée 1.12, est considérée comme sûre. Cette zone comporte le terminal de paiement ainsi que la carte à puce et l'interface de communication entre cette carte à puce et le terminal de paiement. En effet, le terminal de paiement est un appareil professionnel sous le contrôle du commerçant, normalement non connecté à un réseau ouvert tel qu'Internet. Ce terminal court donc peu le risque d'être modifié par des personnes mal intentionnées. De même, les cartes à puce de type bancaire intègrent des fonctionnalités de sécurité importantes rendant leur piratage improbable. Dans le cadre de cette invention, cette zone est considérée comme sûre.

Une seconde zone est constituée de la partie téléphonique et générique du terminal du porteur. Cette partie est constituée du processeur principal 1.4 du terminal, du clavier 1.2 et de l'écran 1.3. Cette partie est considérée comme moins sûre. En effet, les terminaux modernes comportent des systèmes d'exploitations évolués et/ou des machines virtuelles telles qu'un interpréteur JAVA qui permettent l'exécution de logiciels éventuellement téléchargés via un réseau de communication comme Internet. Le porteur est donc susceptible de télécharger sur son terminal des applications tierces pouvant contenir, éventuellement à son insu, du code malicieux. Ces applications peuvent également être téléchargées, à l'insu du porteur, dissimulées dans des messages électroniques reçus sur le terminal ou dans du contenu accessible en ligne et consulté par le porteur depuis le terminal. On ne peut pas non plus exclure la possibilité pour des personnes mal intentionnées de subtiliser temporairement le terminal et d'y installer des applications malicieuses. Une famille d'applications malicieuses est particulièrement redoutée dans le cadre des transactions de paiement électronique, ce sont les applications permettant l'espionnage des touches tapées par le porteur. Ces applications sont connues sous le nom anglais de *keylogger* signifiant enregistreur de touches. Elles s'installent au niveau des pilotes du clavier et enregistrent les séquences de touches entrées par le porteur pour les transmettre à la personne à l'origine de la manipulation. Cette transmission peut se faire, soit par le réseau de communication, soit par subtilisation temporaire à l'insu du propriétaire du terminal.

Les transactions de paiement électronique impliquent une opération d'authentification du porteur de façon à lutter contre l'utilisation frauduleuse du moyen de paiement. Cette authentification est basée sur la vérification d'un secret stocké sur la carte à puce et normalement connu uniquement du porteur. Ce secret est constitué du code PIN *(Personal Identification Number* en anglais) attribué au porteur. Dans la procédure classique d'authentification du porteur dans le cas d'un paiement avec contact ou par carte sans contact, le porteur est généralement invité à entrer son code PIN sur un clavier du terminal de paiement. Le terminal de paiement étant sécurisé, le danger se limite à l'observation du porteur par un tiers pendant la saisie. Ce code, une fois saisi, est confronté au code mémorisé par la carte ou un serveur. Cette opération de vérification du code peut prendre diverses formes selon le degré de sécurité requis. Dans le cas le plus simple, le terminal de paiement envoie le code à la carte qui le compare simplement au code mémorisé pour valider ou non l'authentification. D'autres méthodes existent évitant la transmission du code en clair entre le terminal de paiement et la carte, par exemple, il est possible de demander un numéro aléatoire à la carte puis d'encoder le code à l'aide de ce numéro et d'un autre secret partagé entre le terminal de paiement et la carte. Le résultat de cet encryptage est alors transmis à la carte qui effectue la même opération dont elle compare le résultat avec la valeur reçue. Si les deux résultats sont identiques, on en déduit que le code PIN est valide, dans le cas contraire, l'authentification échoue. Cette méthode évite d'une part la transmission du code PIN en clair entre le terminal de paiement et la carte et d'autre part, évite une fausse authentification en rejouant les mêmes données car le nombre à encrypter demandé à la carte est différent pour chaque authentification.

Lorsque la procédure d'authentification du porteur implique que celui-ci entre son code PIN sur son terminal et non sur le terminal de paiement, celui-ci peut être espionné par une application malicieuse. Pour éviter cela, l'invention propose de générer une matrice de transposition qui est affichée par le terminal de paiement. Cette matrice de transposition définit une transposition de l'alphabet utilisé pour le code. Dans le cas d'un code PIN constitué de chiffres, il s'agit donc de définir une transposition des dix chiffres, c'est-à-dire d'associer à chaque chiffre un autre chiffre qui sera son transposé par ladite matrice. L'utilisateur entre alors une version transposée de son code PIN, c'est-à-dire le code composé, pour chaque chiffre du code original, du chiffre transposé, sur son terminal. De cette manière, la partie non sécurisée du terminal du porteur n'a jamais connaissance du code PIN véritable ni, bien sûr, de la matrice de transposition.

Dans un premier mode de réalisation de l'invention, la matrice de transposition est générée par le terminal de paiement. Le code PIN étant constitué uniquement de chiffres, il est facile de générer une matrice de transposition qui associe à chaque chiffre un autre chiffre. Par exemple, si le chiffre 2 est associé au chiffre 7, chaque occurrence du chiffre 2 dans le code PIN sera remplacée dans le code transposé par le chiffre 7. Cette opération est effectuée pour tous les chiffres du code PIN.

La Fig. 2 illustre deux modes d'affichage de la matrice de transposition sur le terminal de paiement. Dans un premier mode d'affichage, illustré par la Fig. 2a, le terminal possède au moins deux lignes d'affichage capables d'afficher la suite des dix chiffres. La première ligne affiche la succession des chiffres, tandis que la seconde affiche leurs transposées. On voit que le chiffre 0 est associé au chiffre 7, le chiffre 1 au chiffre 6, etc. Dans cet exemple, un code PIN « 3456 » aurait pour transposé « 0439 ». Dans le second mode d'affichage, la première ligne est gravée sur le terminal de paiement et seule la ligne composée des transposés est affichée. Ce mode d'affichage ne nécessite qu'une ligne d'affichage au lieu de deux.

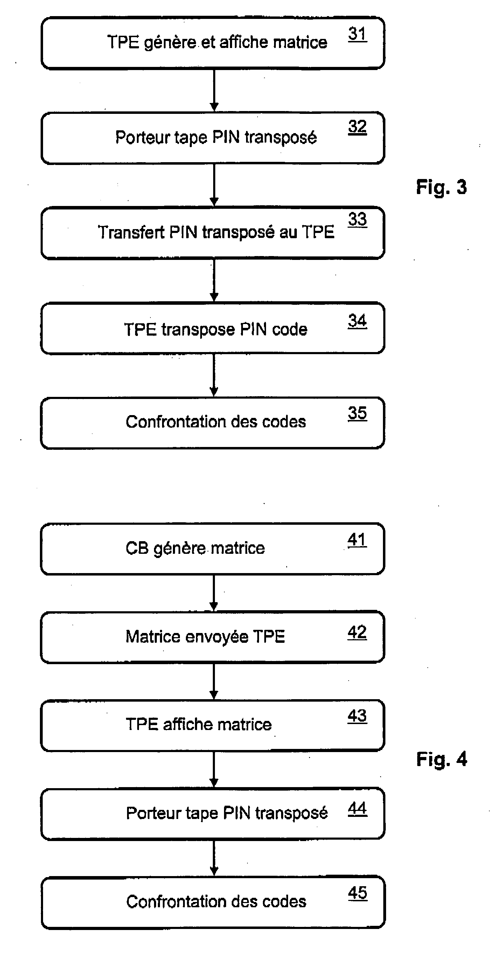

Le mode opératoire du premier mode de réalisation de l'invention est illustré par la Fig. 3. Dans une première étape 31, le terminal de paiement génère et affiche une matrice de transposition. L'utilisateur saisit donc le code transposé, lors d'une étape 32, en lieu et place du code original. Ce code transposé est alors transmis à la carte qui le transmet au terminal de paiement lors d'une étape 33. Celui-ci a la connaissance de la matrice de transposition, il retrouve donc le code PIN original à partir du code PIN transposé par application de la transposition inverse, c'est l'étape 34. Il se trouve alors en possession du code PIN entré par le porteur de la même façon que si celui-ci avait tapé le code original sur le terminal de paiement. La procédure prévue de confrontation, étape 35, du code PIN peut alors être menée de manière classique. Cette confrontation peut impliquer soit le terminal de paiement, soit un serveur, soit la carte, soit encore le terminal du porteur. Dans la mesure où les informations nécessaires à cette confrontation sont transmises aux acteurs chargés de cette confrontation. La confrontation peut être réduite à une simple comparaison entre le code original stocké dans la carte et le code tapé par l'utilisateur et détransposé en utilisant la matrice. Mais, il peut également s'agir de la comparaison du code transposé tapé par l'utilisateur et de la transposition du code original stocké sur la carte. En particulier dans le cas où la confrontation est faite par le terminal du porteur, il faut éviter, pour les raisons de sécurité déjà évoquées, que le code original soit à la disposition de ce terminal. Dans ce cas, le terminal de paiement transmet la matrice de transposition à la carte qui peut alors transmettre la version transposée du code original au terminal du porteur pour la confrontation. On voit que ni le code PIN original du porteur, ni la matrice de transposition permettant de le retrouver, n'ont été accessibles au sein de la partie non sécurisée du terminal du porteur. L'étape de confrontation peut également être basée sur un mécanisme plus sécurisé utilisant la génération de valeurs aléatoires *(challenge* en anglais) servant à coder, ou codées par, le code PIN. Dans ce cas, le code ni original ni transposé n'est jamais transmis, seuls les valeurs aléatoires et le résultat des codages sont transmis et comparés. Tous types de confrontation peuvent donc être ici utilisés sous la condition que le code original ne transite pas au sein du système non sécurisé du terminal du porteur. Dans tous les cas, *in fine,* il s'agit de confronter le code transposé tapé et le code original stocké en ayant la connaissance de la matrice de transposition. Cette opération pouvant donc impliquer une comparaison entre le code transposé et la transposition du code original ou entre une transposition du code tapé par la matrice inverse et le code original, les deux méthodes sont équivalentes.

Préférentiellement, la matrice de transposition est générée aléatoirement pour chaque opération d'authentification. De cette manière, on évite qu'un code transposé récupéré puisse être réutilisé avec le même moyen de paiement. Il est également possible de générer une matrice de transposition différente aléatoirement pour chaque chiffre du code PIN. Dans ce cas, chaque chiffre entré par le porteur est transmis au terminal de paiement, détransposé et ensuite une nouvelle matrice est générée pour l'entrée du chiffre suivant du code PIN. L'opération peut se renouveler pour chaque chiffre du code PIN.

L'exemple de réalisation de l'invention est basé sur des codes PIN à 4 chiffres, mais l'invention peut s'appliquer pour l'entrée de tous types de secrets, numériques ou alphanumériques, et quelle que soit la longueur du secret. Il faut juste générer une matrice de transposition pour l'alphabet dont est issu le secret. Cette matrice sera donc plus longue pour un secret alphanumérique.

Dans un second mode de réalisation de l'invention, l'opération de vérification du code identifiant le porteur n'est plus effectuée de manière classique entre le terminal de paiement et la carte bancaire enfouie dans le téléphone, mais au sein du téléphone lui-même. Dans ce cas, c'est la carte bancaire enfouie et non plus le terminal de paiement qui génère la matrice de transposition. Cette matrice est alors envoyée au terminal de paiement pour affichage. L'affichage a encore lieu sur le terminal de paiement et non sur le terminal du porteur, car l'afficheur du terminal du porteur n'est pas dans la zone sécurisée du système et pourrait être piraté par une personne mal intentionnée en vue de récupérer la matrice de transposition. Le fonctionnement du second mode de réalisation est illustré par la Fig. 4. Dans une première étape 41, la carte bancaire génère la matrice de transposition. La carte envoie la matrice transposée au terminal de paiement, étape 42. Le terminal de paiement affiche alors cette matrice, lors de l'étape 43. Le porteur est alors invité à taper son code PIN transposé à l'aide de la matrice affichée au cours d'une étape 44. La validation de ce code PIN peut alors avoir lieu pour permettre l'authentification du porteur, étape 45. Cette phase de vérification a donc généralement lieu au sein du terminal du porteur par confrontation avec le code stocké sur la carte. Toutefois, la partie non sécurisée de ce terminal n'a, ici encore, pas accès à la version en clair du code. Quel que soit le mode de vérification du code adopté, nous avons vu qu'il existait plusieurs modes, pour le terminal du porteur, le code tapé par le porteur et le code d'identification. Le système du terminal du porteur n'a pas connaissance du fait qu'une opération de transposition est effectuée, celle-ci est transparente pour lui. La carte, par contre, connaît le code original ainsi que la matrice de transposition et effectue les transpositions nécessaires pour vérifier que le code testé par le terminal est bien le transposé du code original. Ici encore, dans des variantes de réalisation, la confrontation des codes peut être faite par les différents acteurs du système, la carte, mais aussi le terminal de paiement, ou encore le terminal du porteur, ou encore un serveur. Cette confrontation peut prendre également toutes les formes déjà décrites dans le premier mode de réalisation.

De cette façon, l'authentification du porteur peut être effectuée en permettant à l'utilisateur de taper son code sur son terminal, par exemple un téléphone mobile, sans craindre qu'un éventuel logiciel malicieux y ait été installé et puisse en prendre connaissance.

## Revendications

1. Procédé de vérification d'un code identifiant un porteur, dans le cadre d'une procédure d'authentification du porteur, le porteur disposant d'un terminal utilisateur contenant une carte bancaire, la carte bancaire communiquant avec un terminal de paiement disposant d'un afficheur, **caractérisé en ce qu'**il comprend les étapes suivantes :
- une étape de génération d'une matrice de transposition de l'alphabet dont est issu le code;
- une étape d'affichage par le terminal de paiement de la matrice de transposition générée ;
- une étape de saisie sur le terminal utilisateur du code transposé correspondant au code identifiant le porteur transposé conformément à la matrice affichée ;
- une étape de confrontation du code transposé et du code original stocké dans le système.

2. Procédé selon la revendication 1, **caractérisé en ce que** l'étape de génération de la matrice de transposition est effectuée par le terminal de paiement.

3. Procédé selon la revendication 2, **caractérisé en ce que** l'étape de confrontation du code transposé et du code original, celui-ci étant stocké dans la carte bancaire, comprend :
- une étape d'envoi au terminal de paiement du code transposé saisi et ;
- une étape de transposition inverse de ce code transposé par le terminal de paiement conformément à la matrice générée.

4. Procédé selon la revendication 2, **caractérisé en ce que** l'étape de confrontation du code transposé et du code original, celui-ci étant stocké sur un serveur distant, comprend :
- une étape d'envoi au terminal de paiement du code transposé saisi;
- une étape d'envoi par le terminal de paiement du code transposé saisi et de la matrice de transposition à un serveur pour la confrontation avec le code original.

5. Procédé selon la revendication 2, **caractérisé en ce que** l'étape de confrontation du code transposé et du code original, celui-ci étant stocké sur un serveur distant, comprend :
- une étape d'envoi au terminal de paiement du code transposé saisi ;
- une étape de détransposition du code transposé, à l'aide de la matrice de transposition, par le terminal de paiement ; et
- une étape d'envoi par le terminal de paiement du code saisi détransposé à un serveur pour la confrontation avec le code original.

6. Procédé selon la revendication 1, **caractérisé en ce que** l'étape de génération de la matrice de transposition est effectuée par la carte bancaire contenue dans le terminal de l'utilisateur.

7. Procédé selon la revendication 6, **caractérisé en ce qu'**il comporte en outre une étape d'envoi de ladite matrice générée par la carte au terminal de paiement pour affichage.

8. Procédé selon l'une des revendications 1 à 7, **caractérisé en ce que** ladite matrice est générée aléatoirement.

9. Procédé selon la revendication 8, **caractérisé en ce qu'**une nouvelle matrice est générée aléatoirement pour chaque caractère saisi.

10. Carte à puce dotée d'une application bancaire comprenant :
- des moyens pour stocker un code identifiant un porteur ;
**caractérisée en ce qu'**elle comporte en outre :
- des moyens pour générer une matrice de transposition de l'alphabet dont est issu le code.

11. Carte à puce selon la revendication 10, **caractérisée en ce qu'**elle comprend en outre des moyens pour confronter un code transposé avec le code original stocké.

12. Terminal comprenant une carte à puce selon l'une des revendications 10 à 11.

13. Terminal de paiement comportant :
- des moyens de communication avec une carte à puce dotée d'une application bancaire ;
**caractérisé en ce qu'**il comporte :
- des moyens d'afficher une matrice de transposition de l'alphabet dont est issu un code identifiant le porteur de ladite carte à puce.

14. Terminal de paiement selon la revendication 13, **caractérisé en ce qu'**il comporte en outre des moyens de générer ladite matrice de transposition.

15. Terminal de paiement selon la revendication 14, **caractérisé en ce qu'**il comporte en outre des moyens d'appliquer à un code reçu depuis la carte à puce une transposition inverse conforme à ladite matrice de transposition.

16. Terminal de paiement selon la revendication 13, **caractérisé en ce qu'**il comporte des moyens de réception de ladite matrice de transposition depuis ladite carte à puce.
